# EUROPÄISCHE PATENTSCHRIFT

(11) **EP 0 522 594 B1**
(45) Veröffentlichungstag und Bekanntmachung des Hinweises auf die Patenterteilung: **10.08.1994**
(21) Anmeldenummer: 92111863.4
(22) Anmeldetag: 11.07.1992
(51) Int. Cl.: G02C 5/22

(54) **Brillengestell**
Spectacle frame
Monture de lunettes

(30) Priorität: 11.07.1991 DE 4122966
(43) Veröffentlichungstag der Anmeldung: 13.01.1993
(73) Patentinhaber: Sporket, Heinz Jürgen, D-41311 Nettetal (DE)
(72) Erfinder: Sporket, Heinz Jürgen, D-41311 Nettetal (DE)

(56) Entgegenhaltungen:
- EP-A- 0 217 763
- DE-A- 4 122 966
- FR-A- 1 379 630
- GB-A- 855 976
- US-A- 3 031 925
- US-A- 4 050 785
- US-A- 4 790 645
- PATENT ABSTRACTS OF JAPAN vol. 13, no. 91 (P-837), 1. Mai 1987 ; & JP-A-63 273 831

## Beschreibung

Die Erfindung betrifft ein Brillengestell, bei dem die Brillenbügel um eine Drehachse verschwenkbar in jeweils einem gabelförmigen Bügelhalter befestigt sind, wobei jeder Bügelhalter Mittel zum Halten der Brillenbügel in einer vorbestimmten Position aufweist.

Der Tragekomfort von Brillen ist unter anderem davon abhängig, wie leicht es ist, die Brille aufzusetzen. Dieses Beurteilungskriterium ist besonders für solche Brillenträger wichtig, die gezwungen sind, ihre Brillen, beispielsweise zum Lesen, Autofahren und normalen Tagesgebrauch, häufig zu wechseln.

Brillen werden in der Regel mit eingeklappten Brillenbügeln aufbewahrt. Daher besteht ein Problem beim Aufsetzen einer Brille darin, daß ihre Brillenbügel vor dem Aufsetzen auseinandergeklappt und in die für das Tragen der Brille angenehme Position geschwenkt werden müssen. Um das Auffinden der Trageposition zu erleichtern, werden die Brillenbügel oder Bügelhalterungen daher mit Anschlägen versehen, durch die die äußerste Schwenkposition der Brillenbügel festgelegt ist.

Neben diesen Brillengestellen sind weitere Brillengestelle bekannt, bei denen die Brillenbügel oder die Bügelhalterungen selbst durch die Auswahl hochwertiger Materialien oder Zwischenschaltung von Federelementen so elastisch ausgelegt sind. Diese in der Herstellung aufwendigen und im Verkauf teuren Brillengestelle können eine Überdehnung des Brillenbügels über die Tragestellung hinaus aufnehmen, ohne daß die Gefahr des Brechens der Anschläge aufgrund einer übermäßigen Belastung entsteht. Ein gemeinsamer Nachteil der bekannten Brillengestelle besteht aber darin, daß die Brillenbügel, insbesondere beim einhändigen Auf- und Absetzen der Brille, selbsttätig aus der Trägerposition schwenken.

Zur Lösung dieses Problems ist beispielsweise aus der US-Patentschrift 30 31 925 ein Brillengestell bekannt, bei dem in dem Überlappungsbereich zwischen jedem Brillenbügel und ihm zugeordnete Bügelhalter eine federnde Kugelrast zum Halten des Brillenbügels in einer vorbestimmten Position ausgebildet ist. Bei einer solchen Halterung rasten die Brillenbügel beim Auseinanderklappen in die vorbestimmte Trageposition ein und werden dort elastisch gehalten, bis sie zum Aufbewahren der Brille wieder eingelegt werden. Diese Art der Halterung erweist sich jedoch aufgrund der stärkeren Belastung von Halterung und Brillenbügel und des erforderlichen Bauraumes für die Rastelemente als ungeeignet für Brillengestelle, die aus sehr dünnem Material bestehen.

Die Aufgabe der Erfindung besteht dagegen darin, mit einfachen Mitteln ein kostengünstiges Brillengestell mit hohem Tragekomfort zu schaffen, bei dem die Brillenbügel während des Auf- und Absetzens der Brille in der Trageposition gehalten werden, ohne daß es zu einer zusätzlichen Belastung der Brillenbügel kommt.

Diese Aufgabe wird bei einem Brillengestell der eingangs genannten Art durch die Merkmale im kennzeichnenden Teil des Anspruchs 1 gelöst.

Bei dieser Lösung werden die Brillenbügel mit Hilfe magnetischer Kräfte in der Trage- oder Aufbewahrungsposition gehalten. Auf diese Weise kann das Aufbringen von beispielsweise für das Einrasten der Kugel in die Einrastfläche erforderlichen Kräfte auf die Bügelhalterung vermieden werden. So ist diese Ausführung der Erfindung besonders für solche Brillengestelle geeignet, deren Bügelhalterung oder Brillenbügel aufgrund der Materialwahl oder der Abmessungen der Halterung zu schwach ausgelegt sind, um eine federnde Belastung aufzunehmen.

Besteht das Brillengestell und besonders die Bügelhalterung selbst aus nicht magnetisierbarem Material, so kann ein magnetischer Halt der Brillenbügel auf einfache Weise dadurch verwirklicht werden, daß jeder Brillenbügel im Bereich der Bügelhalterung ein magnetisches Element trägt und in der Bügelhalterung eine den Gegenpol zu dem magnetischen Element bildende Platte aus magnetisierbarem Material eingesetzt ist, durch die die vorbestimmte Position festgelegt ist. Dabei kann eine einfache Ausführung der zweiten Lösungsalternative dadurch erzielt werden, daß die Bügelhalterungen aus magnetisierbarem Material bestehen und eine Anlagefläche aufweisen, an der das magnetische Element des Brillenbügels in der vorbestimmten Position anliegt.

Das Nachrüsten von vorhandenen Brillengestellen mit magnetischen Haltemitteln kann besonders leicht dann ausgeführt werden, wenn eines der den magnetischen Pol und Gegenpol bildenden Mittel an der Außenseite der Brillenhalterung und das andere Mittel gegenüber zu dem ersten Mittel an der Außenseite des Brillenbügels befestigbar ist.

Ein weiterer Vorteil der Erfindung besteht darin, daß die Drehachse durch einen formschlüssig in der Bügelhalterung gehaltenen Stift gebildet sein kann. Bei Verwendung eines solchen, beispielsweise nach Art einer Niete in der Bügelhalterung gehaltenen Stiftes besteht das Problem nicht mehr, daß Schrauben, die bei den bekannten Brillengestellen für die Drehachse verwendet werden, sich lösen und aus dem Brillengestell herausfallen. Dabei wird durch den magnetischen Halt der ausgeklappten Brillenbügel sichergestellt, daß die Brillenbügel trotz des nun nicht mehr vorhandenen Anpreßdruckes zwischen Bügelhalterung und Brillenbügel in der ausgeklappten Stellung gehalten werden.

Im folgenden soll die Erfindung anhand einer ein Ausführungsbeispiel zeigenden Zeichnung näher erläutert werden. Es zeigen:
- Figur 1: eine aufgebrochene Teilansicht eines Brillengestells mit ausgeschwenkten Brillenbügeln in Aufsicht,
- Figur 2: eine Teilansicht einer anderen Ausführung der Erfindung in Aufsicht.
- Figur 3: eine weitere Alternative der Erfindung in Aufsicht,
- Figur 4: eine vierte Alternative der Erfindung in einer eingeschwenkten Stellung,
- Figur 5: die Ausführungsalternative nach Figur 4 in ausgeschwenkter Stellung.

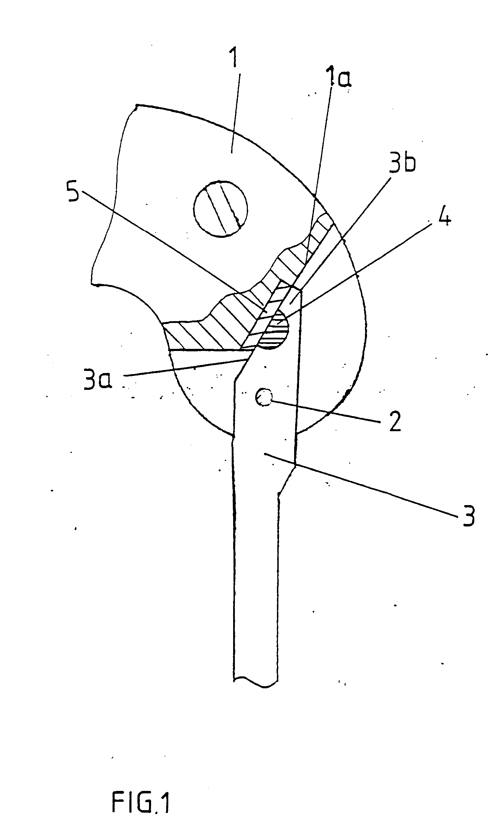

Die Figur 1 zeigt eine Brillenhalterung 1 aus Hornmaterial, bei der ein um eine Drehachse 2 verschwenkbarer Brillenbügel 3 mit Hilfe magnetischer Kräfte in der Trageposition gehalten wird. Dazu trägt der Brillenbügel 3 an der schrägen Seite 3a seiner ein Dreieck bildenden Spitze 3b ein magnetisches Element 4. Die Stirnfläche 1a der Bügelhalterung 1 ist entsprechend der schrägen Seite 3a angewinkelt und bildet einen Anschlag für die Verschwenkbewegung des Brillenbügels 3. Gegenüberliegend zu dem magnetischen Element 4 ist in sie bündig eine Platte 5 aus magnetisierbarem Material eingesetzt, durch die der magnetische Gegenpol zu dem an dem Brillenbügel 3 befestigten magnetischen Element 4 gebildet ist. Die zwischen der Platte 5 und dem magnetischen Element 4 herrschenden Kräfte reichen aus, um den Brillenbügel 3 in der Trageposition zu halten. Sie können zum Zusammenlegen der Brillenbügel 3 leicht durch Aufbringen einer geringen Zusatzkraft überwunden werden.

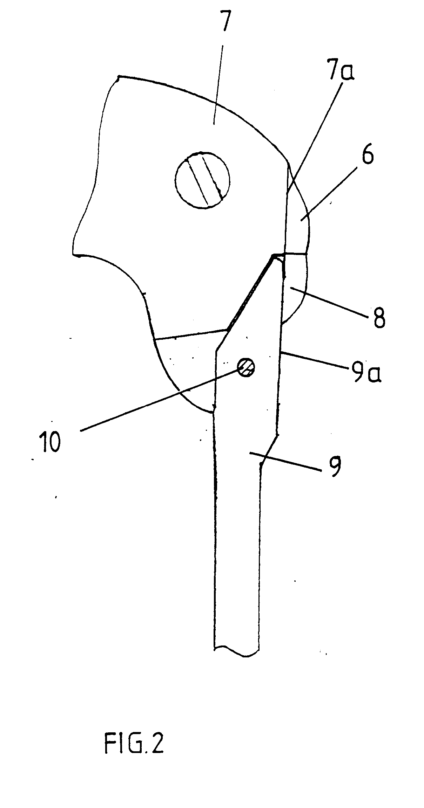

Figur 2 zeigt eine herkömmliche Brille, die mit den erfindungsgemäßen magnetischen Mitteln zum Halten der Brillenbügel in der ausgeklappten Stellung nachgerüstet worden ist. Ein erstes magnetisches Element 6 ist zu diesem Zweck auf die Außenseite 7a einer Bügelhalterung 7 aufgeklebt worden. Alternativ dazu kann das magnetische Element auch auf die Bügelhalterung 7 aufgeschraubt oder aufgenietet werden. In gleicher Weise ist ein zweites magnetisches Element 8 gegenüberliegend zu dem ersten magnetischen Element 6 an der Außenseite 9a des Brillenbügels 9 befestigt. Das magnetische Element 8 kann beispielsweise auch durch ein Formstück aus magnetisierbarem Material gebildet sein. Zusätzlich ist bei der Nachrüstung des Brillengestells die ursprünglich als Drehachse des Brillenbügels 9 vorgesehene Schraube durch einen Stift 10 ersetzt worden, der formschlüssig in der Bügelhalterung, beispielsweise nach Art einer Niete, gehalten ist. Alternativ dazu kann der Stift auch in die Bügelhalterung eingeklebt sein.

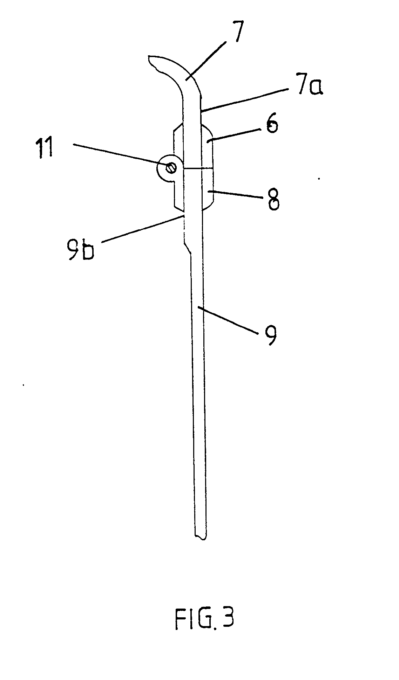

Figur 3 zeigt eine weitere herkömmliche Brille mit einem an der Innenseite 9b des Brillenbügels befestigten Gelenk 11, die mit den erfindungsgemäßen magnetischen Mitteln zum Halten der Brillenbügel in der ausgeklappten Stellung nachgerüstet worden ist. Wie bei dem Ausführungsbeispiel nach Figur 2 ist ein erstes magnetisches Element 6 zu diesem Zweck auf die Außenseite 7a einer Bügelhalterung 7 aufgeklebt worden. Alternativ dazu kann das magnetische Element auch auf die Bügelhalterung 7 aufgeschraubt oder aufgenietet werden. In gleicher Weise ist ein zweites magnetisches Element 8 gegenüberliegend zu dem ersten magnetischen Element 6 an der Außenseite 9a des Brillenbügels 9 befestigt. Das magnetische Element 8 kann beispielsweise auch durch ein Formstück aus magnetisierbarem Material gebildet sein. Zusätzlich ist bei der Nachrüstung des Brillengestells die ursprünglich als Drehachse des Brillenbügels 9 vorgesehene Schraube durch einen Stift 10 ersetzt worden, der formschlüssig in der Bügelhalterung, beispielsweise nach Art einer Niete, gehalten ist. Alternativ kann der Stift auch in die Bügelhalterung eingeklebt sein.

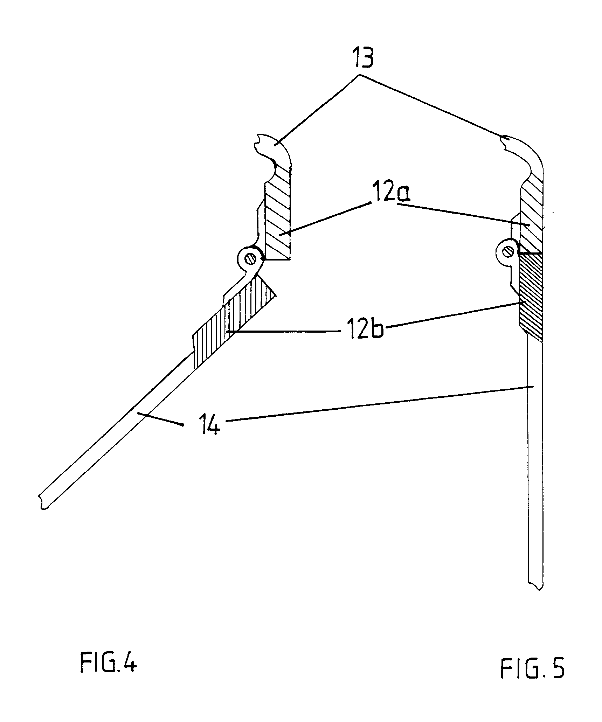

Bei dem Ausführungsbeispiel nach den Figuren 4 und 5 sind die magnetischen bzw. magnetisierbaren Elemente als die beim Aufklappen an einanderstoßenden Enden des Bügels und des Bügelhalters ausgebildet.

## Patentansprüche

1. Brillengestell, bei dem die Brillenbügel (3) um eine Drehachse (2) verschwenkbar in jeweils einem gabelförmigen Bügelhalter (1) befestigt sind, wobei jeder Bügelhalter Mittel zum Halten eines Brillenbügels in einer vorbestimmten Schwenkposition aufweist,
**dadurch gekennzeichnet,** daß die Mittel zum Halten des brillenbügels entweder aus zwei magnetischen Elementen (4,5 ; 6,8) oder aus einem magnetisierbaren Element (5) und einem magnetischen Element (4) bestehen, die am vorderen Ende des Brillenbügels (3) bzw. an dem ihm zugeordneten Bügelhalter (1) so angeordnet sind, daß sie einen lösbaren magnetischen Halt für den Brillenbügel (3) in der vorbestimmten Schenkposition bilden.

2. Brillengestell nach Anspruch 2,
**dadurch gekennzeichnet,** daß die Bügelhalterungen (1) die magnetisierbaren Elemente darstellen und eine Anlagefläche (1a) aufweisen, an der das magnetische Element (4) des Brillenbügels (3) in der vorbestimmten Position anliegt.

3. Brillengestell nach Anspruch 1,
**dadurch gekennzeichnet,** daß eines der den magnetischen oder magnetisierbaren Elemente (6) an der Außenseite (7a) Brillenhalterung (7) und das andere Element (8) gegenüber zu dem ersten Element (7) an der Außenseite (9a) des Brillenbügels (9) befestigt ist.

4. Brillengestell nach einem der vorhergehenden Ansprüche,
**dadurch gekennzeichnet,** daß die Drehachse durch einen formschlüssig in der Bügelhalterung (7) gehaltenen Stift (10) gebildet ist.

## Claims

1. A spectacle frame in which each of the spectacle arms (3) is attached pivotably around a pivot (2) in a forked arm holder (1), each arm holder having means for retaining a spectacle arm in a predetermined pivoted position, characterized in that the means for retaining the spectacle arm consists of either two elements (4, 5; 6, 8) or one magnetizable element (5) and one magnetic element (4) which are so disposed on the front end of the spectacle arm (3) and on the arm holder (1) associated therewith respectively that they form a releasable magnetic retaining means for the spectacle arm (3) in the predetermined pivoted position.

2. A spectacle frame according to claim 2, characterized in that the arm holders (1) form the magnetizable elements and have a bearing surface (1a) against which the magnetic element (4) of the spectacle arm (3) bears in the predetermined position.

3. A spectacle frame according to claim 1, characterized in that one of the magnetic or magnetizable elements (6) is attached to the outside (7a) of the spectacle holder (7), the other element (8) being attached to the outside (9a) of the spectacle arm (9) opposite the first element (7).

4. A spectacle frame according to one of the preceding claims, characterized in that the pivot is formed by a pin (10) positively retained in the arm holder (7).

## Revendications

1. Monture de lunettes dans laquelle les branches (3) des lunettes sont montées chacune dans un support (1) de branche en forme de fourche de façon à pouvoir pivoter autour d'un axe d'articulation (2), chaque support de branche présentant des moyens pour maintenir une branche de lunettes dans une position angulaire prédéterminée, caractérisée en ce que les moyens servant à maintenir la branche de lunettes sont composés, soit de deux éléments magnétiques (4, 5 ; 6, 8), soit d'un élément (5) pouvant être aimanté et d'un élément (4) magnétique, qui sont agencés respectivement à l'extrémité avant de la branche (3) de lunettes ou au support (1) de branche qui lui est conjugué, de manière à former une retenue magnétique séparable pour la branche (3) de lunettes dans la position angulaire prédéterminée.

2. Monture de lunettes selon la revendication 1, caractérisée en ce que les supports (1) de branches représentent les éléments pouvant être aimantés et présentent une surface d'appui (1a) contre laquelle l'élément magnétique (4) de la branche (3) de lunettes est appuyé dans la position prédéterminée.

3. Monture de lunettes selon la revendication 1, caractérisée en ce que l'un (6) des éléments, l'élément magnétique ou l'élément pouvant être aimanté, est fixé à la face extérieure (7a) du support (7) de branche et l'autre élément (8) est fixé à la face extérieure (9a) de la branche (9) de lunettes, face au premier élément (7).

4. Monture de lunettes selon une des revendications précédentes, caractérisée en ce que l'axe de rotation est formé par une broche (10) qui est retenue dans le support (7) de branche par une liaison par sûreté de forme.
